# EUROPEAN PATENT SPECIFICATION

(11) **EP 3 688 386 B1**
(45) Date of publication and mention of the grant of the patent: **26.05.2021**
(21) Application number: 18788945.6
(22) Date of filing: 25.09.2018
(51) Int. Cl.: F25B 41/00

(54) **THROTTLING DISTRIBUTION ASSEMBLY AND REFRIGERATION SYSTEM**
DROSSELVERTEILUNGSANORDNUNG UND KÜHLSYSTEM
ENSEMBLE DE DISTRIBUTION ET D'ÉTRANGLEMENT ET SYSTÈME DE RÉFRIGÉRATION

(30) Priority: 26.09.2017 CN 201710880991
(43) Date of publication of application: 05.08.2020
(73) Proprietor: Carrier Corporation, Jupiter, FL 33478 (US)
(72) Inventor: ZHAO, Bob, Shanghai 201206 (CN); GU, Yan, Shanghai 201206 (CN)
(74) Representative: Dehns
(86) International application number: PCT/US2018/052578
(87) International publication number: WO 2019/067411

(56) References cited:
- WO-A1-2009/146704
- US-A1- 2006 107 689
- US-A1- 2010 313 585
- US-A1- 2011 308 274

## Description

The present invention relates to a throttling and distributing component and to to a refrigerating system including the throttling and distributing component.

It is known that in a refrigerating system, an operating liquid (e.g., a refrigerant) generally needs to be transported from a condenser to an evaporator. In this process, the operating fluid starting from the condenser first passes through a throttling member (e.g., an expansion valve) to form two phases of gas and liquid. Then, the gas-liquid two-phase operating liquid passes through a distribution member (e.g., a distributor), and then is divided into several flows of the operating liquid and transported to respective evaporators or respective evaporator passages.

However, during the distribution, the operating liquid has been divided into two phases of gas and liquid, easily causing problems such as uneven distribution. The uneven distribution of the operating liquid may cause uneven flux of downstream evaporators, thus causing problems of reduced efficiency of the evaporators and instability of the refrigerating system.

Therefore, there are constant requirements on improving the throttling and distributing component and the refrigerating system.

WO 2009/146704 discloses a throttling and distributing component of the type defined in the pre-amble of claim 1.

Example embodiments of present invention may provide a throttling and distributing component, which completes a throttling operation while distributing a refrigerant, thus eliminating the phenomenon of uneven distribution of the refrigerant.

In accordance with a first aspect, the present invention provides a throttling and distributing component, including:
a main body extending from a first end to a second end, wherein a fluid enters the main body from the first end;
a regulator having a valve rod, wherein the valve rod passes through the second end and extends into the main body;
one or more openings disposed on a sidewall of the main body, each opening being in fluid communication with a plurality of branches extending from the main body respectively; and
a piston attached to the valve rod,
wherein the regulator is configured to adjust the position of the piston in the main body by using the valve rod, so as to selectively cover at least a part of each opening. The throttling and distributing component according to the present invention is defined in claim 1.

Optionally, the regulator is a stepper motor.

Optionally, the opening is disposed near the second end.

Optionally, downstream parts of the plurality of branches extend in parallel relative to the main body, and upstream parts of the plurality of branches extend perpendicularly from the main body.

Optionally, the opening is a rectangular opening.

Optionally, the opening has an oval or circular shape.

Optionally, the opening has a hyperbolic or parabolic shape.

Optionally, the piston and the main body jointly define a cavity, the cavity being configured to receive a refrigerant that keeps in a liquid state in the cavity.

Optionally, in a process that the refrigerant enters the branch through the opening, at least a part of the refrigerant is gasified into a gaseous state, such that the refrigerant entering the branch keeps in two phases of gas and liquid.

Viewed from a second aspect, the present invention provides a refrigerating system, including:
a condenser;
the throttling and distributing component as described above, located downstream of the condenser, wherein an output end of the condenser is in fluid communication with the first end of the main body;
a plurality of evaporators or a plurality of evaporator passages located downstream of the throttling and distributing component and in fluid communication with the plurality of branches; and
a controller electrically connected to the regulator and configured to adjust the position of the piston by using the regulator.

The throttling and distributing component and the system of embodiments of the present invention are advantageous in simple structures, reliable running and so on, and can complete a throttling operation while distributing a refrigerant.

The present invention will be described below in further detail with reference to accompanying drawings and preferred embodiments. However, those skilled in the art will understand that these accompanying drawings are merely drawn for explaining the preferred embodiments, and therefore should not be construed as limitations to the scope of the present invention, which is defined by the claims. In addition, unless specified otherwise, the accompanying drawings are merely intended to conceptually represent composition or construction of a described object and may include exaggerated display. Moreover, the accompanying drawings are not necessarily drawn proportionally.
FIG. 1 is a schematic structural diagram of an embodiment of a throttling and distributing component.
FIG. 2 is a schematic partial cross-sectional diagram of the embodiment shown in FIG. 1.

Preferred embodiments of the present invention will be described below in detail with reference to the accompanying drawings. Those skilled in the art will understand that these descriptions are merely descriptive and exemplary, and should not be construed as limitations to the protection scope of the present invention, which is defined by the claims.

First, it should be noted that orientation terms such as top, bottom, upward, and downward mentioned in the text are defined with respect to directions in the accompanying drawings, and they are relative conceptions and thus can very according to their different positions and different use states. Therefore, these or other orientation terms should not be construed as limitative terms.

Moreover, it should be further noted that, for a random single technical feature described or implied in the embodiments of the text or a random single technical feature shown or implied in the accompanying drawings, these technical features (or their equivalents) can still be combined to acquire other embodiments of the present invention that are not directly mentioned in the text.

It should be noted that, in different accompanying drawings, identical reference numerals represent identical or substantially identical components.

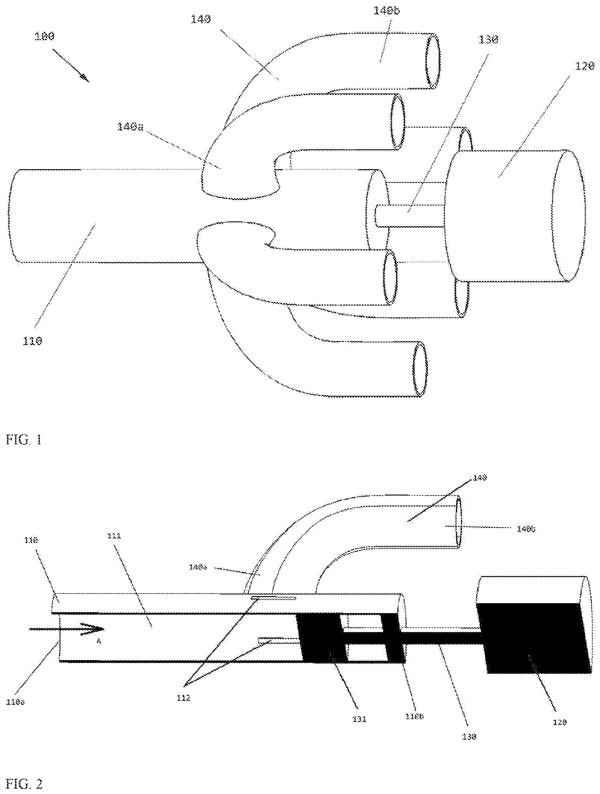

FIG. 1 is a schematic structural diagram of an embodiment of a throttling and distributing component. The throttling and distributing component 100 includes a main body 110; a regulator 120 disposed at one end of the main body 110 and provided with a valve rod 130, wherein the valve rod 130 extends into the main body 110; and a plurality of branches 140 extending out of the main body 110.

Optionally, the regulator 120 is a stepper motor.

Optionally, upstream parts 140a of the plurality of branches 140 extend perpendicularly from the main body 110.

Optionally, downstream parts 140b of the plurality of branches 140 extend in parallel relative to the main body 110.

FIG. 2 is a schematic partial cross-sectional diagram of the embodiment shown in FIG. 1. The main body 110 extends from a first end 110a to a second end 110b, wherein a fluid enters the main body 110 from the first end 110a, and the valve rod 130 passes through the second end 110b and extends into the main body 110. A piston 131 is disposed in the main body 110 and attached to the valve rod 130, wherein the piston 131 and the main body 110 jointly define a cavity 111.

As shown in the figure, one or more openings 112 are disposed on a sidewall of the main body 110, each opening 112 being in fluid communication with a plurality of branches 140 respectively. The regulator 120 is configured to adjust the position of the piston 131 by using the valve rod 130, so as to selectively cover at least a part of each opening 112.

Optionally, the opening 112 is a rectangular opening, such that the flux of a refrigerant entering each branch 140 can be adjusted by regulating the position of the piston.

Optionally, the opening 112 has an oval or circular shape.

Optionally, the opening 112 has a hyperbolic or parabolic shape.

Optionally, the opening 112 is disposed near the second end 110b.

In use, a liquid refrigerant from a condenser enters the cavity 111 from the first end 110a of the main body 110 in a direction indicated by an arrow A. A regulator 120 receives a control signal from a control system that is not shown, and operates the valve rod 130 according to the control signal to dispose the piston 131 in a desired position. The piston 131 selectively covers a part of each opening 112, so as to adjust the flux of the refrigerant entering the branch 140 from each opening 112.

Optionally, the piston 131 is configured to be completely spaced apart from each opening 112.

Optionally, the cavity 111 is configured to receive the refrigerant, and the refrigerant keeps in a liquid state in the cavity 111.

Optionally, in a process that the refrigerant enters the branch 140 through the opening 112, at least a part of the refrigerant is gasified into a gaseous state, such that the refrigerant entering the branch 140 keeps in two phases of gas and liquid.

Optionally, the downstream of each branch 140 is connected to a plurality of evaporators or a plurality of evaporator passages that are not shown.

The throttling and distribution component may be a part of a refrigerating system including:
a condenser located upstream of the refrigerating system;
the throttling and distributing component 100 as described above, located downstream of the condenser, wherein an output end of the condenser is in fluid communication with the first end 110a of the main body 110;
a plurality of evaporators or a plurality of evaporator passages that are not shown, located downstream of the throttling and distributing component 100 and in fluid communication with the plurality of branches 140; and
a controller electrically connected to the regulator 120 and configured to adjust the position of the piston 131 by using the regulator 120.

The throttling and distributing component and the refrigerating system can adjust distribution of a refrigerant by adjusting a position of a piston 131, thus having advantages such as simple structures and reliable running and being capable of completing a throttling operation while distributing the refrigerant.

The present invention is disclosed with reference to the accompanying drawings of the specification. Moreover, those skilled in the art are enabled to implement the present invention, including manufacturing and using any apparatus or system, selecting appropriate materials, and using any combined methods. The scope of the present invention is defined by the claims.

## Claims

1. A throttling and distributing component, comprising:
a main body (110) extending from a first end (110a) to a second end (110b), wherein a fluid enters the main body from the first end;
a regulator (120) having a valve rod (130);
one or more openings (112) disposed on a sidewall of the main body, each opening being in fluid communication with a plurality of branches (140) extending from the main body respectively; and
a piston (131) attached to the valve rod,
wherein the regulator is configured to adjust the position of the piston in the main body by using the valve rod, so as to selectively cover at least a part of each opening;
**characterised in that** the valve rod passes through the second end and extends into the main body.

2. The throttling and distributing component according to claim 1, wherein the regulator (120) is a stepper motor.

3. The throttling and distributing component according to claim 1, wherein the opening (112) is disposed near the second end (110b).

4. The throttling and distributing component according to claim 3, wherein downstream parts (140b) of the plurality of branches (140) extend in parallel relative to the main body (110), and upstream parts (140a) of the plurality of branches extend perpendicularly from the main body.

5. The throttling and distributing component according to claim 4, wherein the opening (112) is a rectangular opening.

6. The throttling and distributing component according to claim 1, wherein the opening (112) has an oval or circular shape.

7. The throttling and distributing component according to claim 1, wherein the opening (112) has a hyperbolic or parabolic shape.

8. The throttling and distributing component according to claim 1, wherein the piston (131) and the main body (110) jointly define a cavity (111), the cavity being configured to receive a refrigerant that keeps in a liquid state in the cavity.

9. The throttling and distributing component according to claim 8, wherein in a process that the refrigerant enters the branch (140) through the opening (112), at least a part of the refrigerant is gasified into a gaseous state, such that the refrigerant entering the branch keeps in two phases of gas and liquid.

10. A refrigerating system, comprising:
a condenser;
the throttling and distributing component according to any of claims 1 to 9 located downstream of the condenser, wherein an output end of the condenser is in fluid communication with the first end (110a) of the main body (110);
a plurality of evaporators or a plurality of evaporator passages located downstream of the throttling and distributing component and in fluid communication with the plurality of branches (140); and
a controller electrically connected to the regulator (120) and configured to adjust the position of the piston (131) by using the regulator.

## Patentansprüche

1. Drossel- und Verteilungsbauteil, das umfasst:
einen Hauptkörper (110), der sich von einem ersten Ende (110a) zu einem zweiten Ende (110b) erstreckt, wobei ein Fluid in den Hauptkörper von dem ersten Ende eintritt;
einen Regler (120), der eine Ventilspindel (130) aufweist;
eine oder mehrere Öffnungen (112), die auf einer Seitenwand des Hauptkörpers angeordnet sind, wobei jede Öffnung jeweils in Fluidverbindung mit einer Vielzahl von Zweigen (140), die sich von dem Hauptkörper erstreckt, steht; und
einen Kolben (131), der an der Ventilspindel angebracht ist,
wobei der Regler dazu konfiguriert ist, die Position des Kolbens in dem Hauptkörper unter Verwenden der Ventilspindel derart einzustellen, dass selektiv mindestens ein Teil jeder Öffnung abgedeckt ist;
**dadurch gekennzeichnet, dass** die Ventilspindel durch das zweite Ende durchgeht und sich in den Hauptkörper erstreckt.

2. Drossel- und Verteilungsbauteil nach Anspruch 1, wobei der Regler (120) ein Schrittmotor ist.

3. Drossel- und Verteilungsbauteil nach Anspruch 1, wobei die Öffnung (112) nahe dem zweiten Ende (110b) angeordnet ist.

4. Drossel- und Verteilungsbauteil nach Anspruch 3, wobei sich stromabwärtige Teile (140b) der Vielzahl von Zweigen (140) parallel zu dem Hauptkörper (110) erstrecken, und sich stromaufwärtige Teile (140a) der Vielzahl von Zweigen senkrecht von dem Hauptkörper erstrecken.

5. Drossel- und Verteilungsbauteil nach Anspruch 4, wobei die Öffnung (112) eine rechteckige Öffnung ist.

6. Drossel- und Verteilungsbauteil nach Anspruch 1, wobei die Öffnung (112) eine ovale oder kreisförmige Form aufweist.

7. Drossel- und Verteilungsbauteil nach Anspruch 1, wobei die Öffnung (112), eine Hyperbel- oder Parabelform aufweist.

8. Drossel- und Verteilungsbauteil nach Anspruch 1, wobei der Kolben (131) und der Hauptkörper (110) gemeinsam einen Hohlraum (111) definieren, wobei der Hohlraum dazu konfiguriert ist, ein Kältemittel aufzunehmen, das in dem Hohlraum in einem flüssigen Zustand bleibt.

9. Drossel- und Verteilungsbauteil nach Anspruch 8, wobei bei einem Prozess, in dem das Kältemittel in den Zweig (140) durch die Öffnung (112) eintritt, mindestens ein Teil des Kältemittels in einen gasförmigen Zustand derart vergast wird, dass das Kältemittel, das in den Zweig eintritt, in zwei Phasen aus Gas und Flüssigkeit bleibt.

10. Kühlsystem, das umfasst:
einen Kondensator;
das Drossel- und Verteilungsbauteil nach einem der Ansprüche 1 bis 9, das stromabwärts des Kondensators liegt, wobei ein Ausgangsende des Kondensators in Fluidkommunikation mit dem ersten Ende (110a) des Hauptkörpers (110) steht;
eine Vielzahl von Verdampfern oder eine Vielzahl von Verdampferpassagen, die stromabwärts des Drossel- und Verteilungsbauteils liegt und mit der Vielzahl von Zweigen (140) in Fluidkommunikation steht; und
eine Steuereinheit, die elektrisch mit dem Regler (120) verbunden und dazu konfiguriert ist, die Position des Kolbens (131) unter Verwenden des Reglers einzustellen.

## Revendications

1. Composant d'étranglement et de distribution, comprenant :
un corps principal (110) s'étendant d'une première extrémité (110a) à une seconde extrémité (110b), dans lequel un fluide entre dans le corps principal à partir de la première extrémité ;
un régulateur (120) présentant une tige de soupape (130) ;
une ou plusieurs ouvertures (112) disposées sur une paroi latérale du corps principal, chaque ouverture étant en communication fluidique avec une pluralité de branches (140) s'étendant à partir du corps principal, respectivement ; et
un piston (131) fixé à la tige de soupape,
dans lequel le régulateur est configuré pour ajuster la position du piston dans le corps principal à l'aide de la tige de soupape, de façon à recouvrir sélectivement au moins une partie de chaque ouverture ;
**caractérisé en ce que** la tige de soupape passe à travers la seconde extrémité et s'étend jusque dans le corps principal.

2. Composant d'étranglement et de distribution selon la revendication 1, dans lequel le régulateur (120) est un moteur pas à pas.

3. Composant d'étranglement et de distribution selon la revendication 1, dans lequel l'ouverture (112) est disposée à proximité de la seconde extrémité (110b).

4. Composant d'étranglement et de distribution selon la revendication 3, dans lequel des parties aval (140b) de la pluralité de branches (140) s'étendent parallèlement par rapport au corps principal (110), et des parties amont (140a) de la pluralité de branches s'étendent perpendiculairement par rapport au corps principal.

5. Composant d'étranglement et de distribution selon la revendication 4, dans lequel l'ouverture (112) est une ouverture rectangulaire.

6. Composant d'étranglement et de distribution selon la revendication 1, dans lequel l'ouverture (112) présente une forme ovale ou circulaire.

7. Composant d'étranglement et de distribution selon la revendication 1, dans lequel l'ouverture (112) présente une forme hyperbolique ou parabolique.

8. Composant d'étranglement et de distribution selon la revendication 1, dans lequel le piston (131) et le corps principal (110) définissent conjointement une cavité (111), la cavité étant configurée pour recevoir un réfrigérant qui reste à un état liquide dans la cavité.

9. Composant d'étranglement et de distribution selon la revendication 8, dans lequel dans un processus où le réfrigérant entre dans la branche (140) par l'ouverture (112), au moins une partie du réfrigérant est gazéifiée à un état gazeux, de telle sorte que le réfrigérant entrant dans la branche reste en deux phases d'un gaz et d'un liquide.

10. Système de réfrigération, comprenant :
un condenseur ;
le composant d'étranglement et de distribution selon l'une quelconque des revendications 1 à 9 situé en aval du condenseur, dans lequel une extrémité de sortie du condenseur est en communication fluidique avec la première extrémité (110a) du corps principal (110) ;
une pluralité d'évaporateurs ou une pluralité de passages d'évaporateur situés en aval du composant d'étranglement et de distribution et en communication fluidique avec la pluralité de branches (140) ; et
un dispositif de commande connecté électriquement au régulateur (120) et configuré pour ajuster la position du piston (131) à l'aide du régulateur.
